# NOUVEAU FASCICULE DE BREVET EUROPEEN

(11) **EP 1 828 077 B2**
(45) Date de publication et mention de la décision concernant l'opposition: **14.08.2019**
(45) Mention de la délivrance du brevet: 23.03.2016
(21) Numéro de dépôt: 05822883.4
(22) Date de dépôt: 25.11.2005
(51) Int. Cl.: C04B 35/565, C04B 35/634, C25C 3/08

(54) **BLOC REFRACTAIRE FRITTE A BASE DE CARBURE DE SILICIUM A LIAISON NITRURE DE SILICIUM**
GESINTERTER FEUERFESTER BLOCK AUF BASIS VON SILICIUMCARBID MIT EINER SILICIUMNITRIDBINDUNG
SINTERED REFRACTORY BLOCK BASED ON SILICON CARBIDE WITH A SILICON NITRIDE BOND

(30) Priorité: 29.11.2004 FR 0412627
(43) Date de publication de la demande: 05.09.2007
(73) Titulaire: Saint-Gobain Centre de Recherches et d'Etudes Européen, 92400 Courbevoie (FR)
(72) Inventeur: JORGE, Eric, F-84210 LES VALAYANS (FR); MARGUIN, Olivier, F-84510 CAUMONT SUR DURANCE (FR)
(74) Mandataire: Nony
(86) Numéro de dépôt international: PCT/FR2005/002936
(87) Numéro de publication internationale: WO 2006/056698

(56) Documents cités:
- CN-A- 1 472 174
- GB-A- 728 306
- JP-A- S5 891 070
- JP-A- 58 091 070
- JP-A- S60 260 197
- JP-A- 2000 302 554
- US-A- 3 960 577
- PATENT ABSTRACTS OF JAPAN vol. 015, no. 508 (C-0897), 24 décembre 1991 (1991-12-24) & JP 03 223166 A (NGK INSULATORS LTD; others: 01), 2 octobre 1991 (1991-10-02)
- DATABASE WPI Section Ch, Week 198606 Derwent Publications Ltd., London, GB; Class L02, AN 1986-039456 XP002337426 & JP 60 260197 A (KYUSHU REFRACTORIES CO LTD) 23 décembre 1985 (1985-12-23)
- FLCKEL A F ET AL: "On the technological potential of SiC-TiB2-Si3N4 compounds in Al-electrolysis cells" LIGHT MET (WARRENDALE PA); LIGHT METALS: PROCEEDINGS OF SESSIONS, TMS ANNUAL MEETING (WARRENDALE, PENNSYLVANIA) 1994 PUBL BY MINERALS, METALS & MATERIALS SOC (TMS), WARRENDALE, PA, USA, 1994, pages 493-499, XP008050115
- REDDY N K: "Influence of infiltrants on the electrical resistivity of silicon nitride bonded silicon carbide refractories" JOURNAL OF MATERIALS SCIENCE LETTERS KLUWER ACADEMIC PUBLISHERS USA, vol. 18, no. 11, 1 juin 1999 (1999-06-01), pages 869-871, XP002337424 ISSN: 0261-8028
- EDWARDS D P ET AL: "The Development of Microstructure in Silicon Nitride-Bonded Silicon Carbide" JOURNAL OF THE EUROPEAN CERAMIC SOCIETY, ELSEVIER SCIENCE PUBLISHERS, BARKING, ESSEX, GB, vol. 15, no. 5, 1995, pages 415-424, XP004047371 ISSN: 0955-2219

## Description

L'invention concerne de nouveaux blocs réfractaires frittés, notamment pour la construction des cuves d'électrolyse de l'aluminium, un procédé pour leur fabrication et une cuve comportant de tels blocs.

US 3,960,577 décrit un produit dense à base de SiC comportant entre 0,3 et 3% en poids de bore.

JP 60260197 décrit un absorbeur de micro-ondes formé par un corps fritté composé de 10 à 70% de carbure de silicium, 15 à 80% de nitrure de silicium et 1 à 50% de nitrure de bore.

JP 58091070 décrit des produits qui, lorsqu'ils comportent du bore, subissent un traitement thermique à une température supérieure à 1700°C.

CN1472174 montre un bloc réfractaire obtenu par frittage réactif sous azote à une température de 1450°C. Le bloc est à base de carbure de silicium à liaison nitrure de silicium et contient 0,5-20 % en poids de borure de zirconium. Le bloc est utilisé pour fabriquer une cuve d'électrolyse de l'aluminium. Le procédé de préparation commence avec une charge comprenant un mélange de 70-80 % en poids d'un granulat de carbure de silicium, 10-20 % en poids de silice, 2-10 % en poids d'un liant et 0,5-20 % de borure de zirconium. Ce mélange est moulé dans une presse et est pressé à 400-1000 tonnes. Après démoulage, la préforme est séchée et cuite sous atmosphère réductrice d'azote à 1450°C. La silice est convertie en nitrure de silicium.

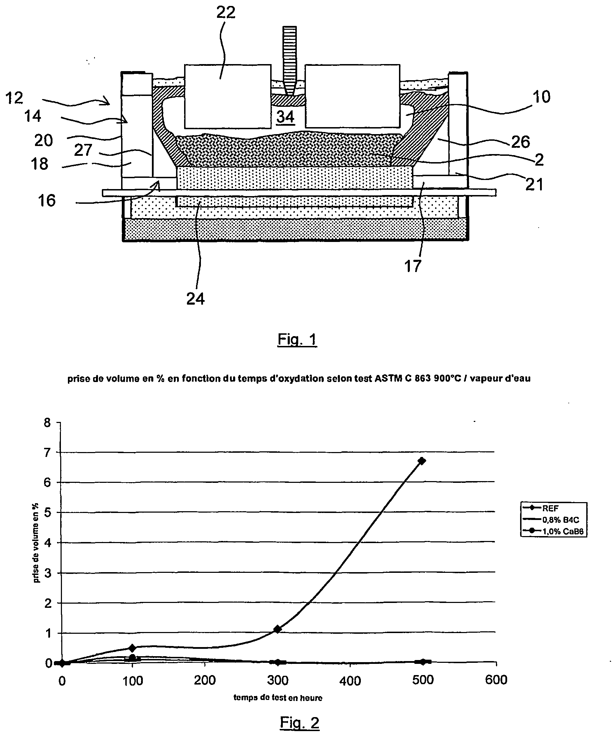

Comme représenté sur la figure 1, de l'aluminium métal 2 peut être produit industriellement par électrolyse d'alumine en solution dans un bain 10 à base de cryolithe fondue. Le bain d'électrolyte 10 est classiquement contenu dans une cuve d'électrolyse 12. La cuve 12 comporte une paroi latérale 14 et un fond 16. Le fond 16 est composé de blocs de fond 17 réfractaires et de blocs cathodiques 24 et, en partie basse, de blocs isolants. La paroi latérale 14 est formée au moyen de blocs réfractaires latéraux 18, ceinturés d'une enveloppe métallique 20, ou « casing ».

Les dimensions d'un bloc réfractaire latéral 18 sont variables. Elles sont classiquement supérieures à 30 x 100 x 100 mm et peuvent atteindre 120 x 300 x 300 mm.

La composition des blocs 18 peut être à base de carbone (graphite et/ou anthracite). Les blocs 18 sont typiquement jointoyés avec un ciment réfractaire 21 disposé entre eux et contre l'enveloppe métallique 20. La cuve 12 comporte au moins une anode 22 et au moins une cathode 24. Les anodes 22 et cathodes 24 sont disposées de manière à être en contact avec le bain de métal fondu, la cathode 24 étant classiquement disposée à proximité du fond 16.

Sous l'effet de la mise sous tension électrique des électrodes 22 et 24, une réaction d'électrolyse se produit dans le bain 10. Il en résulte la formation d'un bain d'aluminium dans la cuve se déposant sur la cathode.

Le passage du courant électrique, de forte intensité, au travers du bain 10 produit également par effet Joule un dégagement de chaleur. L'évacuation de cette chaleur à travers la paroi 14 de la cuve 12 entraîne le dépôt d'une couche 26 de cryolithe solidifiée sur la surface intérieure 27 des blocs 18. Cette couche est appelée « auto garnissage ».

Les blocs 18 doivent assurer la protection de l'enveloppe métallique 20 et permettre une évacuation suffisante de la chaleur pour assurer la stabilisation en température du bain fondu 10. En particulier, il faut absolument éviter d'atteindre des températures au delà desquelles la couche d'auto garnissage 26 de cryolithe solidifiée redeviendrait liquide et contribuerait à une corrosion très rapide des cotés de cuve. Par ailleurs, les blocs 18 sont souvent exposés à des environnements corrosifs (métal liquide à très haute température, cryolithe en fusion en partie inférieure, gaz corrosifs en partie supérieure) et soumis à de hautes températures et des contraintes thermiques et mécaniques importantes.

Pour répondre à ces contraintes, on connaît des blocs à base de granulats de carbure de silicium qui présentent une résistance généralement satisfaisante. Classiquement, le frittage des granulats de carbure de silicium est effectué à une température comprise entre 1600°C et environ 2000°C. Il est également connu de fritter des granulats de carbure de silicium à grains fins à très haute température (2150°C), un ajout de bore et de carbone étant alors possible. Le carbure de silicium est cependant très difficile à fritter et/ou d'un coût prohibitif. En outre, le format des blocs en carbure de silicium fritté est limité notamment du fait du fort retrait à la cuisson.

On connaît également des blocs à base de granulats de carbure de silicium frittés denses, présentant des teneurs en B₄C et en C inférieures à 1%, par exemple le Hexolloy SiC®. Actuellement, leur coût est cependant prohibitif.

On connaît enfin des blocs à base de carbure de silicium (SiC) liés par une matrice de nitrure de silicium (Si₃N₄). Les matériaux de ces blocs ont été développés à la fin des années 1970, et décrits, par exemple, dans US 2,752,258. Ils ont permis d'améliorer le compromis entre la résistance à l'oxydation, la résistance mécanique (érosion) et la conductivité thermique par rapport aux blocs carbonés. L'amélioration de la résistance à l'abrasion est en particulier très avantageuse en fond de cuve où le bain en mouvement sous l'effet des champs magnétiques peut entraîner une forte abrasion.

Ces blocs sont obtenus par frittage réactif d'un mélange de carbure de silicium et de silicium, l'azote provenant de la cuisson sous atmosphère d'azote.

Pour gagner du volume utile et faciliter l'évacuation de la chaleur, les services de recherche tentent de diminuer l'épaisseur de ces blocs. Mais cette diminution d'épaisseur ne peut se faire au détriment de la durée de vie des cuves. Elle doit donc s'accompagner d'une amélioration de la tenue à l'oxydation et à l'attaque par le bain de cryolithe. Ce besoin est d'autant plus important que les sollicitations sur les blocs réfractaires sont de plus en plus grandes. En particulier, on met en oeuvre désormais des cellules d'électrolyse dont l'ampérage est supérieur à 200 000 ampères et où, en conséquence, la chaleur à évacuer est importante, les gaz oxydants sont générés en grande quantité et la couche d'auto garnissage peut devenir instable.

Il existe donc un besoin pour un nouveau bloc réfractaire à base de carbure de silicium (SiC) à liaison nitrure (Si₃N₄) apte à résister efficacement et durablement aux contraintes thermiques et/ou chimiques susceptibles d'être produites dans une cuve d'électrolyse de l'aluminium, en particulier dans la paroi latérale de cette cuve.

Le but de l'invention est de satisfaire ce besoin.

Selon l'invention, on atteint ce but au moyen d'un bloc réfractaire fritté selon la revendication 1.

De façon surprenante, les inventeurs ont découvert que la présence de bore et/ou de calcium apporte une amélioration notable des propriétés d'application pour les cellules d'électrolyse de l'aluminium, en particulier la tenue à l'oxydation et à l'attaque par le bain de cryolithe et la stabilité dimensionnelle dans des conditions d'oxydation.

Le bloc réfractaire selon l'invention présente encore une ou plusieurs des caractéristiques préférées suivantes :
- Le nitrure de silicium (Si₃N₄) sous forme bêta représente, en pourcentages en poids, au moins 40 %, de préférence au moins 60 %, de préférence encore au moins 80 %, de l'ensemble du nitrure de silicium (Si₃N₄) sous forme bêta et sous forme alpha.
- La teneur en Si₂ON₂ en pourcentage en poids est inférieure à 5%, de préférence inférieure à 2%.
- Le bore n'est pas sous forme TiB₂, cette forme du titane n'étant pas stable au contact avec la cryolithe fondue, sous atmosphère oxydante. De plus, TiB₂ est également instable vis-à-vis de l'aluminium.

Le rapport en poids Si₃N₄/SiC est compris entre 5 et 45 %, de préférence entre 10 et 20 %, c'est-à-dire compris entre 0,05 et 0,45, de préférence entre 0,1 et 0,2.

De préférence, le rapport Si₃N₄ 1 SiC est inférieur à 0,3. En outre, la teneur en Si₃N₄ est de préférence supérieure ou égale à 11 %, en pourcentage en poids.

L'invention concerne également une cuve d'électrolyse comportant une paroi latérale comprenant une pluralité de blocs réfractaires, au moins un desdits blocs étant conforme à l'invention. De préférence tous les blocs formant la paroi latérale de la cuve selon l'invention sont conformes à l'invention.

L'invention concerne enfin un procédé de fabrication d'un bloc réfractaire selon la revendication 11.

Les inventeurs ont découvert que l'ajout de bore et/ou de calcium dans les formulations améliore les propriétés des blocs réfractaires frittés à base de carbure de silicium (SiC) à liaison nitrure de silicium (Si₃N₄) obtenus. En particulier la résistance vis-à-vis de la corrosion par les produits fluorés et la cryolithe fondue est améliorée.

Le procédé selon l'invention présente encore une ou plusieurs des caractéristiques préférées suivantes :
- ledit composé de calcium contient du bore ;
- ledit composé de bore est ajouté en une quantité déterminée de manière que le bloc réfractaire obtenu en fin d'étape f) comporte, en pourcentages en poids, de préférence au moins 0,3 %, de préférence encore au moins 0,5 % de bore ;
- ledit composé de bore et/ou de calcium est dépourvu d'oxygène, c'est-à-dire ajouté sous une « forme non-oxyde » ;
- ledit composé de bore est choisi dans le groupe formé par les oxydes, les carbures, les nitrures, les fluorures, les alliages métalliques contenant du bore, en particulier B₄C, CaB₆, H₃BO₃, et BN, de préférence dans le groupe formé par B₄C et CaB₆. De préférence encore ledit composé de bore est CaB₆.
- Ledit composé de calcium est choisi dans le groupe formé par les oxydes, les carbures, les nitrures, les fluorures, les alliages métalliques contenant du calcium et de préférence choisi parmi CaB₆, CaSi, CaSiO₃ et CaCO₃.
- ledit composé de calcium est ajouté en une quantité déterminée de manière à ce que le bloc réfractaire obtenu en fin d'étape f) présente une teneur en calcium comprise entre 0,05 et 1,2%, en pourcentage en poids.

D'autres caractéristiques et avantages de la présente invention apparaîtront encore à la lecture de la description qui va suivre et à l'examen du dessin annexé dans lequel
- la figure 1 représente schématiquement une cuve d'électrolyse en coupe transversale selon un plan sensiblement médian ;
- la figure 2 représente sous forme de courbes la variation de la prise de volume, en %, due à l'oxydation en fonction du temps pour différents blocs testés selon le test ASTM C863 à 900°C ;

Tous les pourcentages de la présente description sont des pourcentages en poids, sauf mention contraire.

Quand un granulat est dit « à base d'un constituant», on entend que ce granulat comporte plus de 50% en poids de ce constituant.

Les procédés bien connus pour fabriquer des blocs réfractaires peuvent être mis en oeuvre pour fabriquer un bloc selon l'invention, pourvu qu'au moins un composé de bore dépourvu d'oxygène soit ajouté dans la charge de départ.

Le procédé selon l'invention comporte les étapes suivants
a) préparation d'une charge comprenant un mélange particulaire comportant un granulat de carbure de silicium et au moins un composé de bore et un composé de calcium, un liant étant optionnellement ajouté audit mélange particulaire,
b) mise en forme de ladite charge dans un moule,
c) compaction de ladite charge à l'intérieur du moule de manière à former une préforme,
d) démoulage de la préforme,
e) séchage de la préforme, de préférence sous air ou atmosphère contrôlée en humidité conformément aux procédés de fabrication de préformes conventionnels,
f) cuisson de la préforme sous atmosphère réductrice d'azote à une température de 1100 à 1700°C et séchage.

A l'étape a), le mélange particulaire comporte de préférence, en pourcentage en poids, de 30 à 90 % de grains réfractaires dont au moins 90% ont une grosseur comprise entre 50 µm et 5 mm et de 10 à 60% d'au moins une poudre réfractaire dont au moins 90% des particules ont un diamètre inférieur à 200 µm. Avantageusement, cette distribution granulométrique permet de conférer une cohésion optimale au bloc fabriqué.

Le bore peut être apporté sous une forme particulaire ou sous n'importe quelle autre forme pourvu que le taux d'humidité maximal du mélange reste inférieur à 7% et, de préférence inférieur à 5%.

La fonction du liant est de former avec le mélange particulaire une masse suffisamment rigide pour conserver sa forme jusqu'à l'étape e). Le choix du liant est dépendant de la forme souhaitée. Grâce au liant, la masse peut avantageusement prendre la forme d'une couche d'épaisseur variable, apte à suivre la paroi du moule, pour former des blocs.

Tout liant connu ou mélange de liants connus peut être utilisé. Les liants sont de préférence « temporaires », c'est-à-dire qu'ils sont éliminés en tout ou en partie lors des étapes de séchage et de cuisson du bloc. De préférence encore, au moins un des liants temporaires est une solution de dérivés d'amidon modifié, une solution aqueuse de dextrine ou de dérivés de la lignone, une solution d'un agent de synthèse tel que l'alcool de polyvinyle, une résine phénolique ou une autre résine de type époxy, un alcool furfurylique, ou un mélange de ceux-ci. De préférence encore, la quantité du liant temporaire est comprise entre 0,5 et 7 % en poids par rapport au poids du mélange particulaire de la charge.

Des additifs de pressage classiquement utilisés pour la fabrication de blocs frittés peuvent être ajoutés au mélange particulaire et au liant. Ces additifs comprennent des plastifiants, par exemple des amidons modifiés ou des polyéthylènes glycol et des lubrifiants, par exemple des huiles solubles ou dérivés de stéarates. Les quantités de ces additifs sont celles mises en oeuvre classiquement lors de la fabrication de blocs réfractaires frittés à base de carbure de silicium (SiC) à liaison nitrure de silicium (Si₃N₄).

Le mélange de la charge est poursuivi jusqu'à obtention d'une masse sensiblement homogène.

A l'étape b), la charge est mise en forme et disposée dans un moule.

A l'étape suivante de compaction ou « pressage » c), le contenu du moule subit une compression par application d'une force sur la surface supérieure de la charge apte à la transformer en une préforme susceptible d'être frittée. Une pression spécifique de 300 à 600 Kg/cm² est appropriée. Le pressage est de préférence effectué de manière uniaxiale ou isostatique, par exemple au moyen d'une presse hydraulique. Il peut être avantageusement précédé d'une opération de damage manuel ou pneumatique et/ou de vibration.

La préforme est ensuite démoulée (étape d)), puis mise à séchée (étape e)). Le séchage peut être effectué à une température modérément élevée. De préférence il est effectué à une température comprise entre 110 et 200°C. Il dure classiquement entre 10 heures et une semaine selon le format de la préforme, jusqu'à ce que l'humidité résiduelle de la préforme soit inférieure à 0,5 %.

La préforme séchée est alors mise à cuire (étape f)). La durée de la cuisson, comprise entre 3 et 15 jours environ de froid à froid, est variable en fonction des matériaux mais aussi de la taille et la forme du bloc. Selon l'invention, la cuisson s'effectue sous azote afin de former par frittage réactif le nitrure qui va servir de liant céramique vis à vis des grains. Le cycle de cuisson est effectué à une température comprise entre 1100°C et 1700°C. Pendant la cuisson, l'azote réagit avec certains des constituants du mélange particulaire de la charge, pour former une matrice de nitrure de silicium apte à lier des grains de cette charge, en particulier les grains de carbure de silicium. Il en résulte un bloc monolithique.

Dans les différents essais ci-dessous, fournis à titre illustratif et non limitatif, les poudres utilisées en tant qu'additifs (B₄C, CaB₆ et CaSiO₃) ont une taille de particules inférieure à 45 µm. Leurs teneurs respectives dans la composition de départ sont indiquées dans le tableau 1.

Du silicium métallique est également ajouté dans une proportion indiquée dans le tableau 1.

On a également utilisé du carbure de silicium dit « noir » ou « réfractaire », de différentes fractions granulométriques, vendu par la société Saint-Gobain Ceramics Materials. Il s'agit d'un matériau essentiellement constitué de la variété SiC alpha et présentant une analyse chimique moyenne, en poids, de 98,5% de SiC.

Le tableau 1 regroupe également les résultats de différents tests permettant de caractériser les produits de l'invention par rapport au produit de référence (produit de type Refrax®). Toutes les mesures sont effectuées au coeur des échantillons.
▪ Les teneurs en azote (N) dans les produits ont été mesurées au moyen d'analyseurs de type LECO (LECO TC 436 DR; LECO CS 300). Les valeurs données sont des pourcentages massiques.
▪ Les teneurs en bore (B) et calcium (Ca) dans les produits ont été mesurées par spectrométrie de fluorescence X. Les valeurs données sont des pourcentages massiques.
▪ Les tests d'oxydation ont été effectués selon la norme ASTM C863. Pour reproduire les conditions d'oxydation rencontrées par les blocs d'une cuve d'électrolyse de l'aluminium, les échantillons (typiquement, de taille 25 x 25 x 120 mm) subissent un test d'au moins 100 heures à 900°C sous atmosphère saturée en vapeur d'eau. L'oxydation génère une prise de masse (valeur « Om », donnée en pourcent) et/ou de volume (valeur « Ov » donnée en pourcent), qui résulte de la transformation du nitrure et du carbure de silicium en silice. Les prises de masse et de volume sont donc des indicateurs du niveau d'oxydation. On considère que deux matériaux sont différents lorsque leurs indicateurs d'oxydation différent d'au moins 1% (en moyenne sur 3 échantillons testés).
▪ La variation de porosité ouverte due au bouchage par les produits d'oxydation de réaction est également une mesure permettant d'évaluer le niveau d'oxydation. La porosité ouverte est mesurée conformément à la norme ISO5017 (valeur « PO-Ox » donnée en pourcent).
▪ Le test de résistance à la corrosion permet d'évaluer le comportement d'échantillons de section 25mmx25mm ayant déjà subi le test d'oxydation. Ces échantillons sont maintenus pendant 22 heures à 1030°C dans un bain de cryolithe fondue. On mesure ensuite leur longueur corrodée, c'est-à-dire la diminution de leur longueur résultant de la corrosion. La valeur « Ic » fournit, en pourcentage, le rapport entre la longueur corrodée de l'échantillon testé et la longueur corrodée de l'échantillon de référence. Plus Ic est faible, meilleure est la résistance à la corrosion.
▪ Les phases cristallines présentes dans les produits réfractaires sont déterminées par diffraction des rayons X. On trouve principalement du nitrure de silicium Si₃N₄ ainsi qu'une phase oxynitrure Si₂ON₂. Les teneurs de ces phases, en pourcentages massiques, sont indiquées dans le tableau 1. Le complément est du SiC.

La masse volumique apparente des produits de l'invention est comprise entre 2,4 et 2,7. Celle du produit de référence est de 2,6.

Le nitrure de silicium peut se présenter sous forme alpha ou bêta. La phase alpha se présente sous forme d'un enchevêtrement de fibrilles de nitrures de silicium alors que la phase bêta est sous forme de grains de forme variable.

Les analyses conduites durant plusieurs années par la Demanderesse ont révélé que le nitrure de silicium sous forme bêta était moins sensible à une combustion rapide du fait de sa plus faible surface spécifique que le nitrure de silicium sous forme alpha. Lors d'une combustion rapide, le nitrure de silicium est oxydé et produit de la silice qui est « consommée » par la cryolithe fondue. Ces réactions conduisent ainsi à une augmentation de la porosité et de la connectivité des pores facilitant la pénétration des matières corrosives. Il est donc avantageux de favoriser la forme bêta pour améliorer la résistance à l'attaque par la cryolithe fondue.

Cependant, il est connu qu'un enrichissement en phase nitrure de silicium bêta s'accompagne généralement d'un enrichissement en phase oxynitrure Si₂ON₂.

Or l'oxynitrure de silicium, comme le silicium résiduel et le Sialon avec des impuretés d'alumine, classiquement générés lors d'un processus de nitruration, sont des phases parasites qui présentent une résistance moindre à la cryolithe en comparaison de celle du nitrure de silicium, quelle que soit la forme du nitrure de silicium. Il est donc avantageux de limiter leurs teneurs.

Les inventeurs ont découvert qu'avantageusement l'ajout de bore et/ou de calcium, de préférence sous une forme dépourvue d'oxygène, dans les charges de départ stimule la transformation en nitrure de silicium bêta durant le processus de nitruration des carbures de silicium à liaison nitrure, et cela sans entraîner un enrichissement préjudiciable en phase oxynitrure Si₂ON₂. Le tableau 1 suivant illustre cette découverte.

Selon l'invention, on ajoute donc un composé de bore, de préférence sous forme non oxyde. Avantageusement, cet ajout conduit à une transformation quasi totale en nitrure de silicium bêta sans enrichissement important en phase oxynitrure Si₂ON₂.

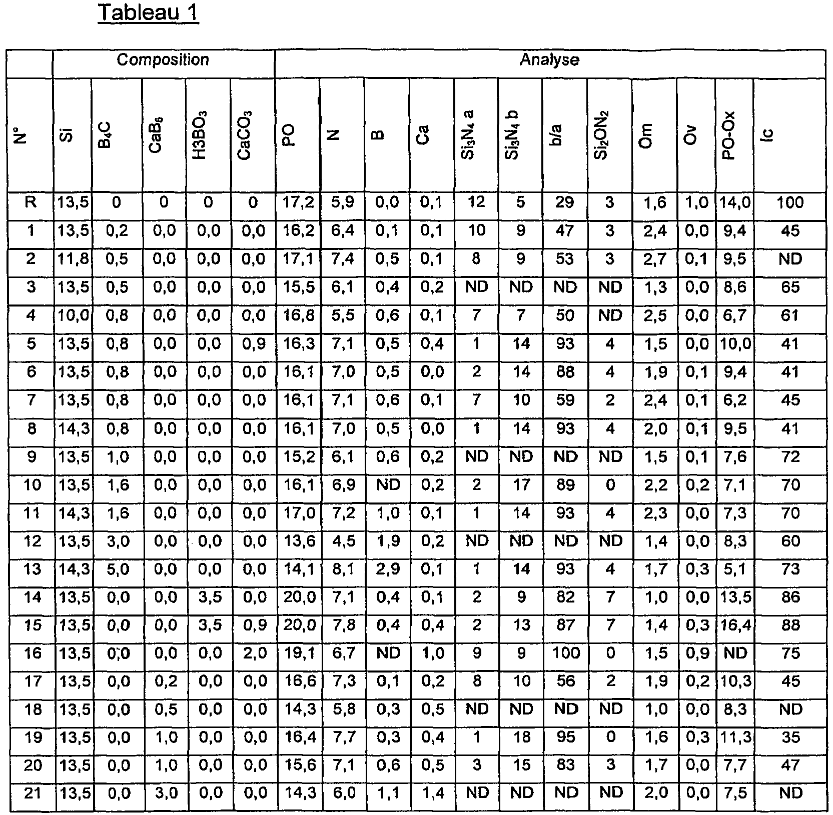

Le tableau 1 indique que l'addition de bore et/ou de calcium permet d'améliorer la résistance à la corrosion des produits réfractaires de carbure de silicium liés par une matrice Si3N4.

Le tableau 1 indique que l'addition de bore et/ou de calcium permet avantageusement d'augmenter la proportion de phase bêta Si₃N₄. Cependant, seule l'addition de bore et/ou de calcium sous une forme non oxyde permet de limiter la teneur en oxynitrure de silicium Si₂ON₂ à des valeurs proches ou inférieure à celle du produit de référence, comme le montrent les exemples 14 et 15.

Le tableau 1 indique que la porosité ouverte est améliorée lorsque le taux de bore dans le produit final est non nul ; seuls les exemples 14, 15 et 16 ont une porosité ouverte supérieure à celle du produit de référence. Pour cela on préfère les produits contenant de 0,05 à 3% de bore.

Par ailleurs, le tableau 1 permet encore de constater que la présence de composés de bore dans la charge de départ catalyse avantageusement la réaction de nitruration (le taux d'azote dans les produits de l'invention est augmenté).

Sans être tenus par une théorie, les inventeurs expliquent en partie l'amélioration de la résistance à la corrosion par la stabilisation de la dégradation à l'oxydation. En effet, comme indiqué dans le tableau 1 et représenté sur la figure 2, la résistance à l'oxydation des produits de l'invention est améliorée.

Le tableau 1 montre que la variation de volume due à l'oxydation est très limitée dans les produits de l'invention. De plus, la prise de masse après oxydation est limitée lorsque des ajouts de calcium sont combinés au bore. Les ajouts de CaB₆ sont donc avantageux, en particulier entre 0,5 et 2%.

La figure 2 montre l'évolution de la résistance à l'oxydation lorsque le test est prolongé pendant 500 heures. L'amélioration par rapport à la référence est confirmée et accentuée.

Le tableau 1 fait apparaître que les ajouts de bore et/ou du calcium ont une influence sur la résistance à la corrosion même pour de très faibles teneurs. Il apparaît également qu'une teneur minimale de 0,8% en poids permet d'obtenir un niveau de résistance à la corrosion sensiblement maximal.

De préférence la teneur en pourcentage en poids de CaB₆ dans la charge de départ est supérieure à 0,5%.

Il apparaît que l'effet d'un ajout de B₄C dans la charge de départ est sensible même à des teneurs de B₄C aussi faibles que 0,2%. Un effet renforcé est obtenu avec une teneur de 0,6 %.

Bien entendu, la présente invention n'est pas limitée aux modes de réalisation décrits et représentés fournis à titre d'exemples illustratifs et non limitatifs.

Les inventeurs ont également observé que l'ajout de bore sous forme non oxyde, et plus spécifiquement de CaB₆ ou B₄C, contribue aussi à augmenter la diffusivité thermique des produits de l'invention, hors effet spécifique lié à la compacité. Cela est bien évidemment très intéressant pour favoriser le transfert de chaleur.

Par ailleurs nous avons constaté que tous les produits de l'invention ne présentent pas de Si₃N₄ sous forme acéculaire, y compris en surface.

Compte tenu des performances à l'oxydation des produits selon l'invention, on peut envisager d'autres applications que l'application à des cuves d'électrolyse.

## Revendications

1. Bloc réfractaire fritté entre 1100 et 1700 °C à base de carbure de silicium (SiC) à liaison nitrure de silicium (Si₃N₄), notamment destiné à la fabrication d'une cuve d'électrolyse de l'aluminium, **caractérisé en ce qu'**il comporte un agent anticorrosion choisi parmi le bore, le calcium et leurs mélanges, la teneur totale en calcium et en bore, en pourcentage en poids, étant comprise entre 0,05 % et 1,5 %, la teneur en bore, en pourcentage en poids, étant d'au moins 0,05 %, le rapport en poids Si₃N₄ / SiC étant compris entre 0,05 et 0,45, la porosité dudit bloc étant supérieure ou égale à 10 %, le pourcentage en poids de calcium étant compris entre 0,05 % et 1,2 %.

2. Bloc réfractaire fritté selon la revendication 1, **caractérisé en ce que** la teneur totale en calcium et en bore, en pourcentage en poids, est comprise entre 0,05 % et 1,2 %.

3. Bloc réfractaire fritté selon l'une quelconque des revendications 1 et 2, **caractérisé en ce qu'**il comporte, en pourcentage en poids, au moins 0,3 % de bore.

4. Bloc réfractaire fritté selon l'une quelconque des revendications précédentes, **caractérisé en ce que** le nitrure de silicium (Si₃N₄) sous forme bêta représente, en pourcentage en poids, au moins 40 % de l'ensemble du nitrure de silicium (Si₃N₄) sous forme bêta et sous forme alpha.

5. Bloc réfractaire fritté selon la revendication 4, **caractérisé en ce que** le nitrure de silicium (Si₃N₄) sous forme bêta représente, en pourcentage en poids, au moins 80 % de l'ensemble du nitrure de silicium (Si₃N₄) sous forme bêta et sous forme alpha.

6. Bloc réfractaire fritté selon l'une quelconque des revendications précédentes, **caractérisé en ce que** la teneur en Si₂ON₂, en pourcentage en poids, est inférieure à 5 %.

7. Bloc réfractaire fritté selon la revendication précédente, dans lequel la teneur en Si₂ON₂, en pourcentage en poids, est inférieure à 2 %.

8. Bloc réfractaire fritté selon l'une quelconque des revendications précédentes, dans lequel le rapport en poids Si₃N₄ / SiC est compris entre 0,1 et 0,2.

9. Bloc réfractaire fritté selon l'une quelconque des revendications précédentes, dans lequel la teneur en Si₃N₄ est supérieure ou égale à 11 %, en pourcentage en poids.

10. Bloc réfractaire fritté selon l'une quelconque des revendications précédentes, dans lequel le bore n'est pas sous forme de TiB₂.

11. Procédé de fabrication d'un bloc réfractaire à base de carbure de silicium à liaison nitrure de silicium, notamment destiné à la fabrication d'une cuve d'électrolyse de l'aluminium, ledit procédé comportant les étapes successives suivantes :
a) préparation d'une charge comprenant un mélange particulaire comportant un granulat de carbure de silicium et au moins un composé de bore et un composé de calcium, un liant étant optionnellement ajouté audit mélange particulaire,
b) mise en forme de ladite charge dans un moule,
c) compaction de ladite charge à l'intérieur du moule de manière à former une préforme,
d) démoulage de ladite préforme,
e) séchage de ladite préforme, de préférence sous air ou atmosphère contrôlée en humidité,
f) cuisson de ladite préforme sous atmosphère réductrice d'azote à une température comprise entre 1100 à 1700°C,
ledit composé de bore et ledit composé de calcium étant ajoutés en une quantité déterminée de manière que le bloc réfractaire obtenu en fin d'étape f) soit conforme à l'une quelconque des revendications précédentes.

12. Procédé de fabrication selon la revendication précédente, dans lequel, à l'étape c), on applique une pression spécifique comprise entre 300 et 600 kg/cm³.

13. Cuve d'électrolyse comportant une paroi latérale comprenant une pluralité de blocs réfractaires, **caractérisée en ce qu'**au moins un desdits blocs est conforme à l'une quelconque des revendications 1 à 10.

## Patentansprüche

1. Feuerfestblock, der zwischen 1100 und 1700°C gesintert ist, auf der Basis von Siliciumcarbid (SiC) in Verbindung mit Siliciumnitrid (Si₃N₄), insbesondere bestimmt für die Herstellung einer Wanne für die Aluminium-Elektrolyse,
**dadurch gekennzeichnet, dass** er ein Antikorrosionsagen enthält, welches ausgewählt ist aus Bor, Kalzium und deren Mischungen, wobei der Gesamtgehalt an Kalzium und an Bor, in Gewichtsprozent, zwischen 0,05% und 1,5% liegt, der Gehalt an Bor, in Gewichtsprozent, mindestens 0,05% ist, das Gewichtsverhältnis Si₃N₄ / SiC zwischen 0,05 und 0,45 liegt und die Porosität des Blocks größer oder gleich 10% beträgt und der Gewichtsprozentsatz des Kalziums zwischen 0,05% und 1,2% liegt.

2. Gesinterter Feuerfestblock nach Anspruch 1, **dadurch gekennzeichnet, dass** der Gesamtgehalt an Kalzium und an Bor in Gewichtsprozenten zwischen 0,05% und 1,2% liegt.

3. Gesinterter Feuerfestblock nach einem der Ansprüche 1 und 2, **dadurch gekennzeichnet, dass** er in Gewichtsprozent mindestens 0,3% Bor enthält.

4. Gesinterter Feuerfestblock nach einem der vorhergehenden Ansprüche, **dadurch gekennzeichnet, dass** das Siliciumnitrid (Si₃N₄) in der Beta-Form in Gewichtsprozenten mindestens 40% der Gesamtheit des Siliciumnitrids (Si₃N₄) in Beta-Form und Alpha-Form beträgt.

5. Gesinterter Feuerfestblock nach Anspruch 4, **dadurch gekennzeichnet, dass** das Siliciumnitrid (Si₃N₄) in der Beta-Form in Gewichtsprozent mindestens 80% der Gesamtheit des Silicumnitrids (Si₃N₄) in der Beta- und der Alpha-Form beträgt.

6. Gesinterter Feuerfestblock nach einem der vorhergehenden Ansprüche, **dadurch gekennzeichnet, dass** der Gehalt an Si₂ON₂ in Gewichtsprozent kleiner als 5% ist.

7. Gesinterter Feuerfestblock nach dem vorhergehenden Anspruch, in welchem der Gehalt an Si₂ON₂ in Gewichtsprozent kleiner als 2% ist.

8. Gesinterter Feuerfestblock nach einem der vorhergehenden Ansprüche, in welchem das Gewichtsverhältnis Si₃N₄ / SiC zwischen 0,1 und 0,2 liegt.

9. Gesinterter Feuerfestblock nach einem der vorhergehenden Ansprüche, in welchem der Gehalt an Si₃N₄ größer oder gleich 11% ist und zwar in Gewichtsprozent.

10. Gesinterter Feuerfestblock nach einem der vorhergehenden Ansprüche, in welchem das Bor nicht in der Form von TiB₂ vorliegt.

11. Herstellungsverfahren für einen Feuerfestblock auf der Basis von Siliciumcarbid in Verbindung mit Siliciumnitrid, insbesondere bestimmt zur Fabrikation einer Wanne für die Aluminiumelektrolyse, wobei das Verfahren die folgenden aufeinanderfolgenden Schritte aufweist:
a) Zubereitung einer Charge, die eine Teilchenmischung aufweist, welche ein Granulat aus Siliciumcarbid enthält und mindestens eine Bor-Verbindung und eine Kalziumverbindung sowie ein Bindemittel, welches optional der Teilchenmischung hinzugefügt wird,
b) Formen der Charge in einer Gießform,
c) Verdichtung der Charge im Innern der Gießform, derart, dass eine Vorform geformt wird,
d) Entformen der Vorform,
e) Trocknung der Vorform, bevorzugterweise an der Luft oder in einer feuchtigkeitsgeregelten Atmosphäre,
f) Brennen der Vorform in einer reduzierenden Stickstoffatmosphäre bei einer Temperatur zwischen1100 und 1700°C,
wobei die Bor-Verbindung und die Kalziumverbindung in einer bestimmten Menge hinzugefügt werden, derart, dass der Feuerfest-Block, der am Ende von Schritt f) erhalten wird, mit einem der vorhergehenden Ansprüche konform ist.

12. Herstellungsverfahren nach dem vorhergehenden Anspruch, in welchem in Schritt c) ein spezifischer Druck zwischen 300 und 600 kg/cm³ appliziert wird.

13. Elektrolysewanne, die eine Seitenwand aufweist, welche eine Vielzahl von Feuerfestblöcken enthält, **dadurch gekennzeichnet, dass** mindestens einer dieser Blöcke mit einem der Ansprüche 1 bis 10 konform ist.

## Claims

1. Refractory block sintered between 1,100°C and 1,700°C, based on silicon carbide (SiC) with a silicon nitride binder (Si₃N₄), intended in particular for fabricating an aluminum electrolysis cell, **characterized in that** it includes an anti-corrosion agent chosen among boron, calcium and mixtures thereof, the total amount of calcium and boron, as a percentage by weight, being in the range 0.05% to 1.5%, the content of boron, as a percentage by weight, being of at least 0.05%, the Si3N4/SiC weight ratio being in the range 0.05 to 0.45, the porosity of said block being 10% or more, the percentage by weight of calcium being in the range 0.05% to 1.2%.

2. Sintered refractory block according to claim 1, **characterized in that** the total amount of calcium and boron is in the range 0.05% to 1.2%.

3. Sintered refractory block according to any one of claims 1 and 2, **characterized in that** it includes at least 0.3% by weight of boron, as a percentage by weight.

4. Sintered refractory block according to any one of the preceding claims, **characterized in that** the silicon nitride (Si₃N₄) in the beta form represents, as a percentage by weight, at least 40% of the whole of the silicon nitride (Si₃N₄) in the beta form and in the alpha form.

5. Sintered refractory block according to claim 4, **characterized in that** the silicon nitride (Si₃N₄) in the beta form represents, as a percentage by weight, at least 80% of the whole of the silicon nitride (Si₃N₄) in the beta form and in the alpha form.

6. Sintered refractory block according to any one of the preceding claims, **characterized in that** the amount of Si₂ON₂, as a percentage by weight, is less than 5%.

7. Sintered refractory block according to the preceding claim, in which the amount of Si₂ON₂, as a percentage by weight, is less than 2%.

8. Sintered refractory block according to any one of the preceding claims, in which the Si₃N₄/SiC weight ratio is in the range 0.1 to 0.2.

9. Sintered refractory block according to any one of the preceding claims, in which the Si₃N₄ content is 11% or more, as a percentage by weight.

10. Sintered refractory block according to any one of the preceding claims, in which the boron is not in the form of TiB₂.

11. Fabrication method to fabricate a refractory block based on silicon carbide, with a silicon nitride binder, intended in particular for fabricating an aluminum electrolysis cell, said method comprising the following steps in succession:
a) preparing a charge comprising a particulate mixture comprising a silicon carbide granulate and at least one boron compound and one calcium compound, a binder optionally being added to said particulate mixture;
b) forming said charge in a mold;
c) compacting said charge in the mold to form a preform;
d) unmolding said preform;
e) drying said preform, preferably in air or a moisture-controlled atmosphere;
f) firing said preform in a reducing atmosphere of nitrogen at a temperature in the range 1,100°C to 1,700°C;
said boron compound and said calcium compound being added in a quantity which is determined so that the refractory block obtained at the end of step f) is according to any one of the preceding claims.

12. Fabrication method according to the previous claim, in which, at step c), a specific pressure of 300 to 600 kg/cm² is applied.

13. Electrolysis cell including a side wall comprising a plurality of refractory blocks, **characterized in that** at least one of said blocks is in accordance with any one of claims 1 to 10.
